# EUROPEAN PATENT APPLICATION

(11) **EP 0 627 294 A1**
(43) Date of publication of application: **07.12.1994**
(21) Application number: 94303555.0
(22) Date of filing: 18.05.1994
(51) Int. Cl.: B29C 45/56

(54) **Injection compression molding method and injection compression molding machine**

(30) Priority: 31.05.1993 JP 154226/93
(71) Applicant: GE PLASTICS JAPAN LIMITED, Chuo-Ku, Tokyo (JP)
(72) Inventor: Suzuki, Tadashi, Mishima City, Shizouka Prefecture (JP); Komiya, Yoshichika, Susono City, Shizuoka Prefecture (JP)
(74) Representative: Pratt, Richard Wilson

(57) **Abstract**

An illustrative embodiment of the present invention seeks to provide an injection compression molding method that can produce large molded products having superior external appearance with functional resin, and an injection molding machine suitable for implementing said injection compression molding method.

The illustrative injection compression molding method makes control of the linear velocity of the melted resin fluid front injected into the die cavity possible, regardless of whether the die is opened or is closed and the capacity has changed. An illustrative injection compression molding machine for implementing the injection compression molding method has die opening position detection part (13), screw position detection part (24), and control part (3), which executes control while maintaining the outputs from said detection parts in a prescribed relationship.

## Description

The present invention relates to an injection compression molding method for obtaining synthetic resin molded products and an injection compression molding machine suitable for executing said method.

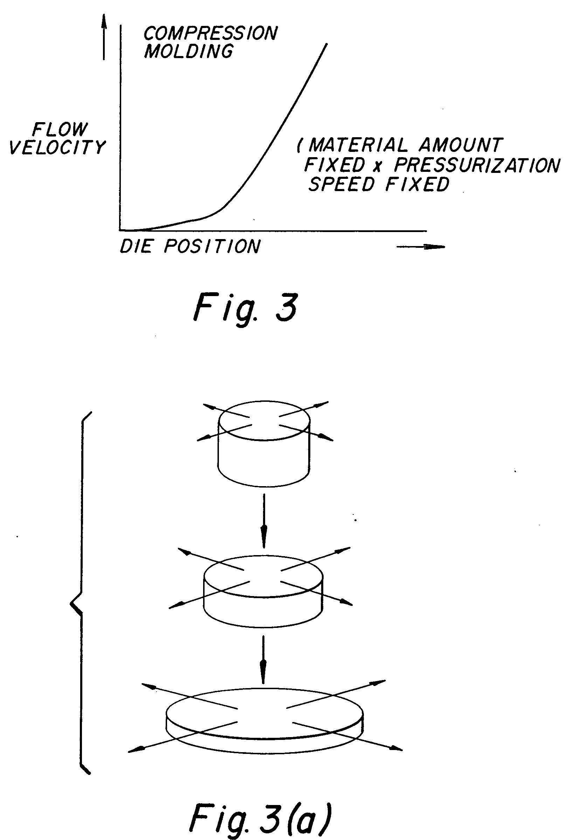

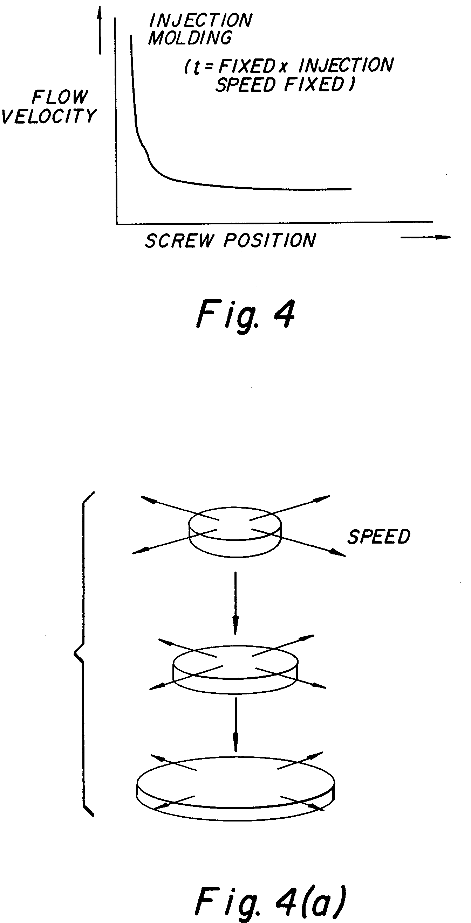

Background to the present invention will now be explained with reference, by way of example, to Figures 3 and 4 of the accompanying drawings, in which:

Figure 3 is an explanatory figure showing the relation to the resin flow velocity in the case of conventional compression molding.

Figure 4 is an explanatory figure showing the relation to the resin flow velocity in the case of conventional injection molding.

As is known, when molding a relatively large molded product with synthetic resin material, there is a tendency for cracks and warpage to be created when injection molding is executed. In order to avoid this situation, an injection compression molding method, which combines the injection molding method and compression molding method and utilizes the merits of both, is used.

The characteristics of conventional compression molding method and conventional injection molding method will be explained with reference to Figure 3. Figure 3 shows the relationship between the flow velocity of the resin and the die position in the case of compression molding. As shown in the figure, when the resin quantity is fixed and the pressurization speed is also fixed, the flow velocity of the resin is low at first, then gradually becomes higher. The state of the flow velocity, in this case, becomes like the graph on the upper part of the figure.

In contrast, as in Figure 4, which shows the relationship between the flow velocity of the resin and the screw position in the injection molding method, when the die position is fixed and the injection speed is also fixed, the initial flow velocity is high, then gradually becomes low. This means that the change is opposite that of compression molding.

In an injection compression molding method, which combines said two molding methods, the change in the flow velocity of resin is complex, and control of the flow velocity corresponding to the resin type and product shape becomes important.

In the injection compression molding method related to the conventional technology, generation of molding deformation, warpage, etc., are pointed out in comparison to the conventional injection molding method. In order to solve said disadvantage, countermeasures, such as improving the die clamping process, increasing the die temperature, etc., are used, and for example, die clamping for molding compression is started by the signal generated at injection end, or when a prescribed time lapses after injection end, or is started during the injection.

In the injection compression molding method conventionally executed extensively, the flow velocity of the resin fluid end and the resin injection quantity could not be controlled accurately, a hesitation mark was created in the product surface, and the external appearance became defective. The defect in the external appearance can be prevented by starting the compression during the injection but synchronized control of the injection side and the compression side was difficult; thus, there was the disadvantage of generating variance in the product weight, etc.

Embodiments of the present invention aim to solve said disadvantages in the conventional technology, along with providing an injection compression molding method for obtaining molded products with superior external appearance.

An illustrative injection compression molding method according to the present invention is characterized by an injection compression method that can make the external appearance of the resin molded product favorable, by making control of the velocity of the resin fluid front injected into the die cavity possible, whether the die is open or closed. Furthermore, it is characterized by an injection compression molding machine provided with a signal detection part, which extracts signals expressing the die position, a detection part, which detects the signals expressing said die position and signals expressing the position of the screw for melted resin injection, and a control part, which controls the signals expressing said die position and the signals expressing said screw position while maintaining a prescribed relationship.

An illustrative injection compression molding method according to the present invention solves the variance in the weight of the molded products and defects in the external appearance by controlling the injection operation of the melted resin and the compression operation of the die, so that it becomes the prescribed relationship. In the conventional technology, the fluid end stops and starts solidifying after injection is completed when starting compression after injection completion. By starting the compression thereafter, fluidization is started again, but an external appearance defect was created, with the solidified end as the changing point of the velocity.

According to the illustrative injection compression molding method of the present invention, injection of the melted resin and the die compression can always be controlled to be synchronous; thus, variance in the product thickness and product weight is not generated.

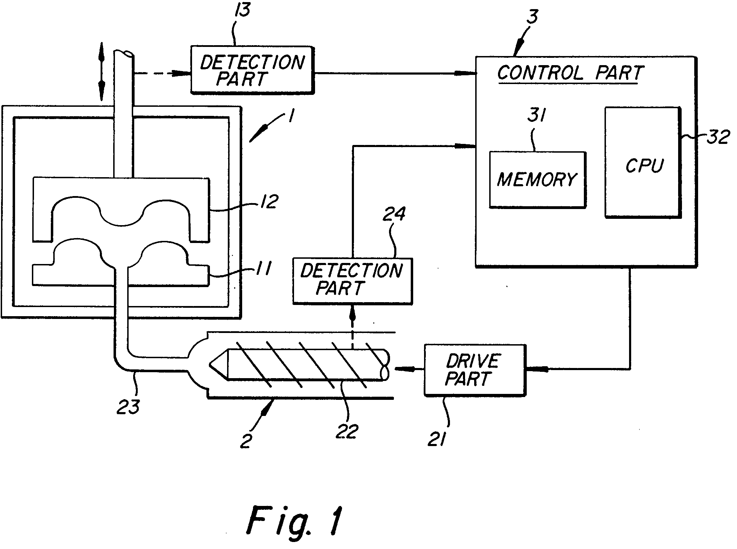

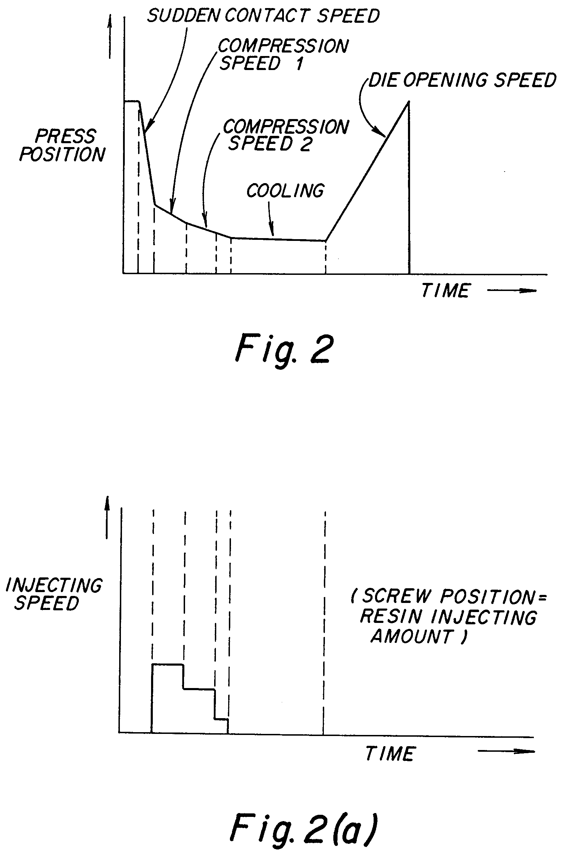

For a better understanding of the present invention reference will now be made by way of example to Figures 1 and 2 of the accompanying drawings in which:

Figure 1 is an explanatory figure showing the arrangement in the main part of the injection compression molding machine for implementing the injection compression molding method related to said invention.

Figure 2 is an example of the time curve of the screw position and the die position in injection compression molding.

Figure 1 shows an essential example of an injection compression molding machine suitable for implementing the injection compression molding method related to said invention. Die (1) is composed of fixed die (11) and movable die (12) connected to the press device having a publicly known structure, etc., and the position of movable die (12) is detected by die position detection part (13).

Melted resin injection part (2) has screw (22) driven by drive part (21), and injects the resin, melted within the cycliner heated by a heater not shown in the figure, into the die cavity from melted resin flow path (23). This screw (22) can be a plunger. The position of said screw (22) or plunger is detected by detection part (24).

Reference numeral (3) indicates a control part provided with memory (31) which stores the relationship between the die position and the screw position, and central processing unit (CPU) (32). This control part (3) receives the output of die position detection part (13) and calculates the corresponding screw position by comparing with memory (31), then generates a comparison control signal in respect to drive part (21). As a result, the optimal screw position complying to the die position is obtained and the necessary objective is achieved.

Figure 2 is a graph showing the relationship between the screw position and the die opening amount when executing injection compression molding. Here, the screw position corresponds to the injecting amount of the melted resin, and the die opening amount corresponds to the position of the press for applying pressurization force to the movable die.

### [0016]

This type of relationship is stored in the memory and control is executed according to said memory content. For example, a signal of the die position is extracted with detection part (13), this signal is provided to comparison control part (3), the corresponding screw position is extracted from the memory, feedback control is executed with both drive part (22) and screw position detection part (21), and the corresponding control is executed.

The die position and the screw position, consequently, the relation to the resin injecting amount, can be suitably changed according to the type of resin used, the shape and dimension of the molded product, etc. This kind of content can be used by storing various data in the memory, then making a selection or using a removable cassette or card.

By executing control of the screw position, namely, resin injecting amount and the die position, namely, compressing force with the equipment shown in the figure, the flow velocity of the resin fluid end within the cavity becomes controllable. Therefore, external appearance defects, such as generation of hesitation marks, can be prevented, regardless of the size or the shape of the resin molded product. Furthermore, the injecting amount of the melted resin is accurately controlled, so variance in the product weight can be prevented.

In summary, an illustrative embodiment of the present invention seeks to provide an injection compression molding method that can produce large molded products having superior external appearance with functional resin, and an injection molding machine suitable for implementing said injection compression molding method.

The illustrative injection compression molding method makes control of the linear velocity of the melted resin fluid front injected into the die cavity possible, regardless of whether the die is opened or is closed and the capacity has changed. An illustrative injection compression molding machine for implementing the injection compression molding method has die opening position detection part (13), screw position detection part (24), and control part (3), which executes control while maintaining the outputs from said detection parts in a prescribed relationship.

With the illustrative injection compression molding method according to the present invention, it is possible to make the external appearance of the molded product favorable and eliminate variance in the product weight by optionally controlling the velocity of the resin fluid end within the die in coordination with the resin type, the shape and dimension of the molded product, etc. Also, it is possible to produce, at low cost, large molded products having a big projected area with low die clamping force.

## Claims

1. An injection compression molding method, characterized by controlling the linear velocity of the melted resin fluid front injected into the die cavity, whether the die is open or closed and the capacity is changing.

2. An injection compression molding machine, characterized by providing in an injection compression resin-molding machine,
a signal detection part, which extracts the signals expressing the die cavity opening position, a detection part, which detects the signals expressing the screw position for melted resin injection according to the signal expressing said die position, and a control part, which executes control while maintaining the signal expressing said die position and the signal expressing said screw position in a prescribed relationship.
